# EUROPEAN PATENT APPLICATION

(11) **EP 4 075 571 A1**
(43) Date of publication of application: **19.10.2022**
(21) Application number: 20897917.9
(22) Date of filing: 07.12.2020
(51) Int. Cl.: H01M 10/613

(54) **BATTERY PACK, ELECTRIC TOOL SYSTEM COMPRISING SAME, AND CHARGING SYSTEM**

(30) Priority: 13.12.2019 CN 201911289702
(71) Applicant: Positec Power Tools (Suzhou) Co., Ltd., Suzhou, Jiangsu 215123 (CN)
(72) Inventor: ZENG, Lin, Suzhou, Jiangsu 215123 (CN); YAN, Mingxing, Suzhou, Jiangsu 215123 (CN)
(74) Representative: Dentons UK and Middle East LLP
(86) International application number: PCT/CN2020/134292
(87) International publication number: WO 2021/115227

(57) **Abstract**

The present invention relates to a battery pack, including: a battery pack housing; and a cell group arranged in the battery pack housing, the cell group including a plurality of electrically connected cells. The battery pack housing includes a housing upper portion and a housing lower portion arranged opposite to the housing upper portion. A first air vent is provided on the housing lower portion, and a second air vent is provided on the housing upper portion. A longitudinal direction of the cells is vertically arranged along an up-down direction of the battery pack housing. A heat dissipation channel in communication with the first air vent and the second air vent is formed in the battery pack. At least part of peripheral surfaces of the cells are arranged in the heat dissipation channel. The beneficial effects of the present invention are as follows: The cells are uniformly cooled, and the heat dissipation effect of the battery pack is improved, thereby improving the service life of the battery pack and the working time of a single pack.

## Description

### BACKGROUND

### Technical Field

The present invention relates to a battery pack, an electric tool system including the battery pack, and a charging system including the battery pack.

### Related Art

When a battery pack works, cells generate heat, and as the temperature rises, the discharge performance and service life of the cells are reduced. The higher the temperature, the worse the impact on the performance of the battery pack. Therefore, how to quickly dissipate heat from the battery pack has become an urgent problem to be solved.

In the related art, a longitudinal axial direction of cells is perpendicular to the vertical direction, and especially for a large-capacity battery pack, the quantity of cells is large, resulting in overlapping arrangement of the cells in the vertical direction. Moreover, more cells indicate more overlapping cells. However, in a natural state, heat generated by the cells is transferred from bottom to top. When the foregoing arrangement is adopted, higher cells are at a higher temperature in the vertical direction, resulting in a worse working condition of the battery and affecting the service life of the battery.

### SUMMARY

To overcome the defects of the related art, the problem that the present invention needs to resolve is to provide a battery pack with a good heat dissipation effect, an electric tool system including the battery pack, and a charging system including the battery pack.

The present invention provides a battery pack, including: a battery pack housing; and a cell group, arranged in the battery pack housing, the cell group including a plurality of electrically connected cells, where the battery pack housing includes a housing upper portion and a housing lower portion arranged opposite to the housing upper portion, a first air vent is provided on the housing lower portion, a second air vent is provided on the housing upper portion, a longitudinal direction of the cells is vertically arranged along an up-down direction of the battery pack housing, a heat dissipation channel in communication with the first air vent and the second air vent is formed in the battery pack, and at least part of peripheral surfaces of the cells are arranged in the heat dissipation channel. In this way, the heat dissipation channel runs through the longitudinal direction of the cells, the area of cooled cells is larger, and the cooling effect is better.

Optionally, there are a plurality of cell groups, and the plurality of cell groups are stacked along the longitudinal direction of the cells. The cell group is arranged in such a way that cooling air can come into contact with each cell to the maximum extent, ensuring that the cells can be cooled uniformly.

Optionally, the first air vent includes a plurality of first air holes, the second air vent includes a plurality of second air holes, and a ratio of each of a sum of cross-sectional areas of the plurality of first air holes and a sum of cross-sectional areas of the plurality of second air holes to a cross-sectional area of the cell group is not less than 0.2. Such arrangement can ensure the ventilation volume of the first air vent and the second air vent, thereby ensuring the heat dissipation effect of the battery pack.

Optionally, the battery pack further includes a housing middle portion arranged between the housing upper portion and the housing lower portion, and a third air vent is provided on the housing middle portion. The third air vent is added to the battery pack, which can increase the ventilation volume of cooling air, thereby better cooling the battery pack.

Optionally, the cell group includes a bracket for fixing the cells, a plurality of openings are provided on the bracket, and the openings are in communication with the heat dissipation channel. The openings in communication with the heat dissipation channel are provided on the bracket, so that the cooling air are in direct contact with the surfaces of the cell, to achieve a better cooling effect.

Optionally, an air guide plate protrudes on a side of the bracket close to the cells, and the air guide plate is configured to change an airflow direction in the heat dissipation channel, so that the cooling air is allowed to flow toward cells with higher temperatures, to uniformly cool the cells.

Optionally, a holdable handle is arranged on the battery pack housing, the handle includes a first end portion and a second end portion that are separately connected to the battery pack housing, and a holding portion connecting the first end portion and the second end portion, and the handle has flexibility to enable a distance of the holding portion relative to the battery pack housing to change. In this way, the portability of the battery pack can be greatly improved, the reliability of the handle can be improved, and a hand of an operator can be accommodated in a small space, so that the overall size of the battery pack is relatively small.

Optionally, the handle is made of a rubber material.

Optionally, the battery pack further includes an adapting portion for connecting to an external device, and an unlocking portion for releasing position locking between the battery pack and the external device.

Optionally, the unlocking portion is arranged on a side of the handle, and a minimum distance between the unlocking portion and the handle in a horizontal direction is not greater than 85 mm.

Optionally, the battery pack further includes a power display portion for displaying an electric quantity of the battery pack, and the power display portion and the adapting portion are arranged on a same side of the battery pack.

Optionally, the adapting portion and the unlocking portion are arranged on opposite sides of the battery pack.

Optionally, a concave surface and an edge surface surrounding the concave surface are provided on a surface of the battery pack housing on which the handle is arranged, the concave surface is away from the holding portion relative to the edge surface, and a projection of the holding portion on the concave surface at least partially coincides with the concave surface.

Optionally, the first end portion and the second end portion are separately arranged on the edge surface.

Optionally, a distance between the holding portion and the concave surface is between 14 and 17 mm.

Optionally, the battery pack is detachably and slidably connected to an external device along the longitudinal direction of the cells.

Optionally, the battery pack includes an adapting portion for connecting to an external device along a sliding direction, the adapting portion is arranged on a side portion of the battery pack housing, the adapting portion includes a pair of sliding rails or sliding grooves extending in parallel along the sliding direction, a distance between the pair of sliding rails or sliding grooves is defined as a first width, an outermost boundary of the side portion has a second width perpendicular to the sliding direction, and a ratio of the first width to the second width is between 0.47 and 0.52. Such arrangement can not only ensure the compact structure of the battery pack, but also ensure that the battery pack is firmly connected to an electric tool or a charger.

Optionally, the second width ranges from 64 to 71 mm. Such arrangement can not only ensure the compact structure of the battery pack, but also ensure that the battery pack is firmly connected to the external device.

Optionally, a length of the sliding rail or the sliding groove is defined as a first height, the outermost boundary of the side portion has a second height parallel to the sliding direction, and a ratio of the first height to the second height is between 0.48 and 0.5. Such arrangement can not only ensure the compact structure of the battery pack, but also ensure that the battery pack is firmly connected to the external device.

Optionally, the adapting portion further includes a first terminal groove and a second terminal groove extending in parallel along the longitudinal direction of the cells, a positive terminal accommodated in the first terminal groove and configured to be electrically connected to the external device, and a negative terminal accommodated in the second terminal groove and configured to be electrically connected to the external device. Such arrangement achieves a more stable and reliable connection between the battery pack and the external device.

Optionally, the first terminal groove and the second terminal groove are arranged between a pair of sliding rails or sliding grooves, and a center distance between the first terminal groove and the second terminal groove is between 37 and 42 mm. Such arrangement can ensure the space for implementing the electrical connection between the battery pack and the external device.

Optionally, the battery pack further includes an unlocking portion for releasing position locking between the battery pack and the external device, and the unlocking portion is arranged on another side of the battery pack opposite to the adapting portion. Such arrangement is convenient for the operator to apply a relatively balanced force to the battery pack when unlocking the battery pack or plugging the battery pack.

Optionally, a handle is arranged on the battery pack, and the unlocking portion is arranged close to the handle, so that the hand holding the handle can operate the unlocking portion simultaneously. In this way, the operator can simultaneously complete the two actions of holding and unlocking the battery pack with one hand, and remove the battery pack from the external device during unlocking.

Optionally, the handle has flexibility to enable a distance of the handle relative to the battery pack housing to change when the handle is held. In this way, the holding is comfortable, and the overall height of the battery pack is reduced.

Optionally, the battery pack further includes a power display portion for displaying an electric quantity of the battery pack, and the power display portion and the adapting portion are arranged on a same side of the battery pack. This facilitates wiring of a circuit board inside the battery pack and reduces space and costs.

Optionally, the adapting portion does not extend beyond the outermost boundary of the side portion. In this way, the battery pack is cuboid in shape and small in size.

The present invention further provides an electric tool system, including an electric tool body, the electric tool body including a tool housing, a motor accommodated in the tool housing, and an output portion driven by the motor, where the electric tool system further includes the battery pack described above, the tool housing includes a receiving portion for receiving at least part of the battery pack, the battery pack is detachably connected to the electric tool body, the battery pack provides power for the motor, and when the battery pack is connected to the electric tool body, an airflow is allowed to flow from the first air vent through the at least part of the peripheral surfaces of the cells and flow out from the second air vent. When the battery pack is connected to the electric tool body, the airflow is not blocked, and can still enter the battery pack along the heat dissipation channel to cool the cells. Optionally, the receiving portion includes a bottom surface arranged opposite to the housing lower portion, a first ventilation hole is provided on the bottom surface, and the first ventilation hole is airflow-communicable with the first air vent. In this way, the cooling air is not blocked by the electric tool body in the vertical direction, and an effective heat dissipation channel can be formed from bottom to top. The cooling air enters the battery pack in the shortest distance for cooling, and there is no loss of air volume, which has a better cooling effect on the cells.

Optionally, a gap is provided between the receiving portion and the battery pack, and an airflow is allowed to enter the first air vent through the gap, flow through the at least part of the peripheral surfaces of the cells, and flow out from the second air vent. In this way, the airflow can enter the battery pack from the gap, and is not blocked by the electric tool body.

Optionally, the battery pack further includes a housing middle portion arranged between the housing upper portion and the housing lower portion, a third air vent is provided on the housing middle portion, the electric tool body further includes a fan arranged in the tool housing, the receiving portion includes a side surface arranged opposite to the housing middle portion, a second ventilation hole is provided on the side surface, and when the battery pack is accommodated in the receiving portion, an airflow generated by the fan includes: a first airflow, sucked from the first air vent and flowing to the third air vent; and a second airflow, sucked from the second air vent and flowing to the third air vent, the first airflow and the second airflow merging at the third air vent, and then flowing out from the second ventilation hole. The fan is arranged in the electric tool body, which can form the additional first airflow and second airflow to cool the battery pack, thereby achieving a better cooling effect.

Optionally, a power display portion for displaying an electric quantity of the battery pack is arranged on the battery pack housing, and when the battery pack is connected to the electric tool body, the power display portion is exposed to the receiving portion. This makes it easy to observe the electric quantity of the battery pack when in use.

Optionally, the battery pack further includes a locking portion and an unlocking portion, the locking portion is configured for position locking between the battery pack and the electric tool body, the unlocking portion is configured to release the position locking between the battery pack and the electric tool body, and the unlocking portion is exposed to the receiving portion. This makes it easy for the operator to remove the battery pack from the receiving portion.

The present invention further provides a charging system, including a charger, the charger including a charger housing and a charging circuit arranged in the charger housing, where the charging system further includes the battery pack described above, the charger housing includes a receiving portion for accommodating at least part of the battery pack, the battery pack is detachably connected to the charger, and when the battery pack is connected to the charger, an airflow is allowed to flow from the first air vent through the at least part of the peripheral surfaces of the cells and flow out from the second air vent.

Optionally, the receiving portion includes a bottom surface arranged opposite to the housing lower portion, a first ventilation hole is provided on the bottom surface, and the first ventilation hole is airflow-communicable with the first air vent. In this way, the airflow is not blocked by the charger in the vertical direction, and an effective heat dissipation channel can be formed from bottom to top. The cooling air enters the battery pack in the shortest distance for cooling, and there is no loss of air volume, which has a better cooling effect on the cells.

Optionally, a gap is provided between the receiving portion and the battery pack, and an airflow is allowed to enter the first air vent through the gap, flow through the at least part of the peripheral surfaces of the cells, and flow out from the second air vent. In this way, the airflow can enter the battery pack from the gap, and is not blocked by the charger.

Optionally, the battery pack further includes a housing middle portion arranged between the housing upper portion and the housing lower portion, a third air vent is provided on the housing middle portion, the charger further includes a fan arranged in the charger housing, the receiving portion includes a side surface arranged opposite to the housing middle portion, a second ventilation hole is provided on the side surface, and when the battery pack is accommodated in the receiving portion, an airflow generated by the fan includes: a first airflow, sucked from the first air vent and flowing to the third air vent; and a second airflow, sucked from the second air vent and flowing to the third air vent, the first airflow and the second airflow merging at the third air vent, and then flowing out from the second ventilation hole. The fan is arranged in the charger, which can form the additional first airflow and second airflow to cool the battery pack, thereby achieving a better cooling effect.

Optionally, a power display portion is arranged on the battery pack housing, and when the battery pack is connected to the charger, the power display portion is exposed to the receiving portion. This makes it easy to observe the electric quantity of the battery pack when in use.

Optionally, the battery pack includes a locking portion and an unlocking portion, the locking portion is configured for position locking between the battery pack and the charger, the unlocking portion is configured to release the position locking between the battery pack and the charger, and the unlocking portion is exposed to the receiving portion. This makes it easy for the operator to remove the battery pack from the receiving portion.

Compared with the related art, the beneficial effects of the present invention are as follows: The heat dissipation channel running through the cells is formed in the battery pack, so that the heat is dissipated more smoothly, the cells are uniformly cooled, and the heat dissipation effect of the battery pack is improved, thereby improving the service life of the battery pack and the working time of a single pack.

### BRIEF DESCRIPTION OF THE DRAWINGS

The foregoing objectives, technical solutions, and beneficial effects of the present invention can be achieved by using the following accompanying drawings:
FIG. 1 and FIG. 2 are three-dimensional views of a battery pack viewed from different perspectives in an embodiment.
FIG. 3 is a bottom view of the battery pack in an embodiment of FIG. 1.
FIG. 4 is a rear view of the battery pack in an embodiment of FIG. 1.
FIG. 5 is a right view of the battery pack in an embodiment of FIG. 1.
FIG. 6 is an exploded view of a battery pack in an embodiment.
FIG. 7 is a three-dimensional view of a first bracket of a battery pack in an embodiment.
FIG. 8 is a three-dimensional view of a second bracket of a battery pack in an embodiment.
FIG. 9 is a cross-sectional view of a battery pack in an embodiment.
FIG. 10 and FIG. 13 are three-dimensional views of an electric tool body in different directions in an embodiment.
FIG. 11 is a three-dimensional view of an electric tool system in an embodiment.
FIG. 12 and FIG. 14 are cross-sectional views of an electric tool system in an embodiment.
FIG. 15 is a three-dimensional view of a charger in an embodiment.
FIG. 16 is a three-dimensional view of a charging system in an embodiment.
FIG. 17 and FIG. 18 are cross-sectional views of a charging system in an embodiment.

### DETAILED DESCRIPTION

The details of the present invention can be more clearly understood with reference to the accompanying drawings and the descriptions of the specific implementations of the present invention. However, the specific implementations of the present invention described herein are only for the purpose of explaining the present invention, and should not be construed as limiting the present invention in any way. Under the teaching of the present invention, a skilled person can conceive any possible modifications based on the present invention, which should be regarded as belonging to the scope of the present invention. It should be noted that, when a component is referred to as "being arranged on" another component, the component may be directly on the another component, or there may be an intermediate component. When a component is considered to be "connected to" another component, the component may be directly connected to the another component, or there may be an intermediate component. The terms such as "mount", "connect", and "connection" should be understood in a broad sense. For example, the connection may be a mechanical or electrical connection, a connection within two components, a direct connection, or an indirect connection by using an intermediate medium. A person of ordinary skill in the art may understand specific meanings of the foregoing terms according to a specific situation. The terms "vertical", "horizontal", "upper", "down", "left", "right" and similar expressions used in this specification are only for purposes of illustration but not indicate a unique implementation.

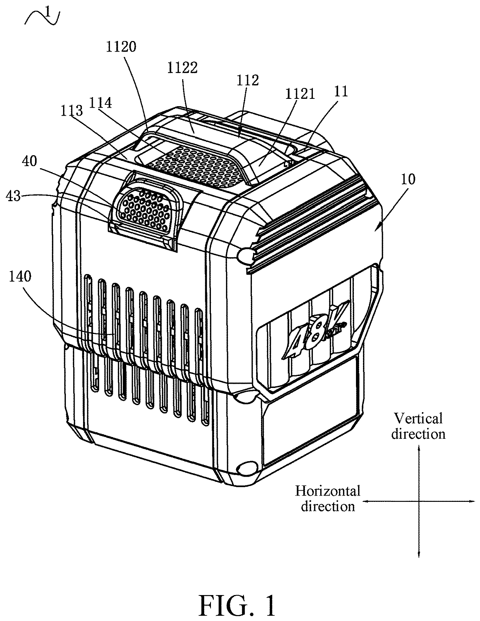

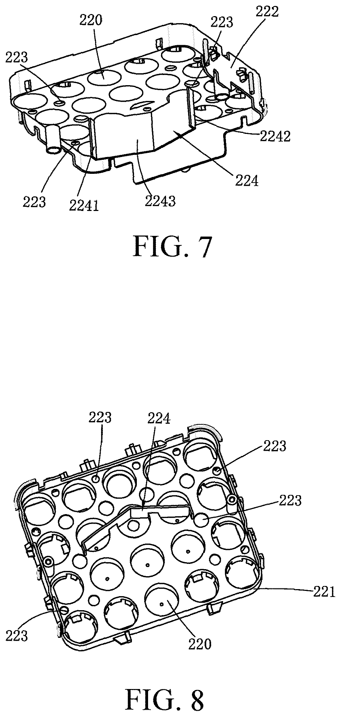

As shown in FIG. 1 to FIG. 9, an embodiment of the present invention provides a battery pack 1. The battery pack 1 includes a battery pack housing 10. A cell group 20 is arranged in the battery pack housing 10. The cell group 20 includes a plurality of electrically connected cells 21.

The quantity of cells 21 and a series-parallel connection manner among the cells 21 may be adjusted according to a voltage of the cells 21 and different nominal voltages, which are not specifically limited in the present invention. Specifically, the cells 21 may be connected in series or in parallel by using connecting pieces, or in a manner of combining series connection and parallel connection, to form the cell group. In an embodiment, the cell 21 is in the shape of a cylinder, and a longitudinal direction of the cell 21 is a longitudinal direction of the cylinder. Certainly, the cell 21 may alternatively be in the shape of a prism, which is not limited herein.

In an embodiment, the battery pack housing 10 includes a housing upper portion and a housing lower portion arranged opposite to the housing upper portion, a first air vent 121 is provided on the housing lower portion, a second air vent 111 is provided on the housing upper portion, and a longitudinal direction of the cells 21 is vertically arranged along an up-down direction of the battery pack housing 10. The up-down direction of the battery pack housing 10 refers to a direction in which the housing upper portion and the housing lower portion are in communication with each other. A heat dissipation channel Q1 in communication with the first air vent 121 and the second air vent 111 is formed in the battery pack 1, and an airflow in the heat dissipation channel Q1 can flow through at least part of peripheral surfaces of the cells 21. In this way, the heat dissipation channel Q1 runs through the longitudinal direction of the cells 21, and the cooling air is in direct contact with the peripheral surfaces of the cells, to ensure that the cells can be uniformly cooled.

In an embodiment, the housing upper portion includes a top surface 11, and the housing lower portion includes a bottom surface 12. Optionally, the first air vent 121 is provided on the bottom surface 12, and the second air vent 111 is provided on the top surface 11. When the temperature of the cells increases, the heat dissipation channel Q1 enabling circulation from bottom to top is formed in the battery pack 1, and the longitudinal direction of the cells 21 is substantially parallel to a circulation direction of the heat dissipation channel Q1.

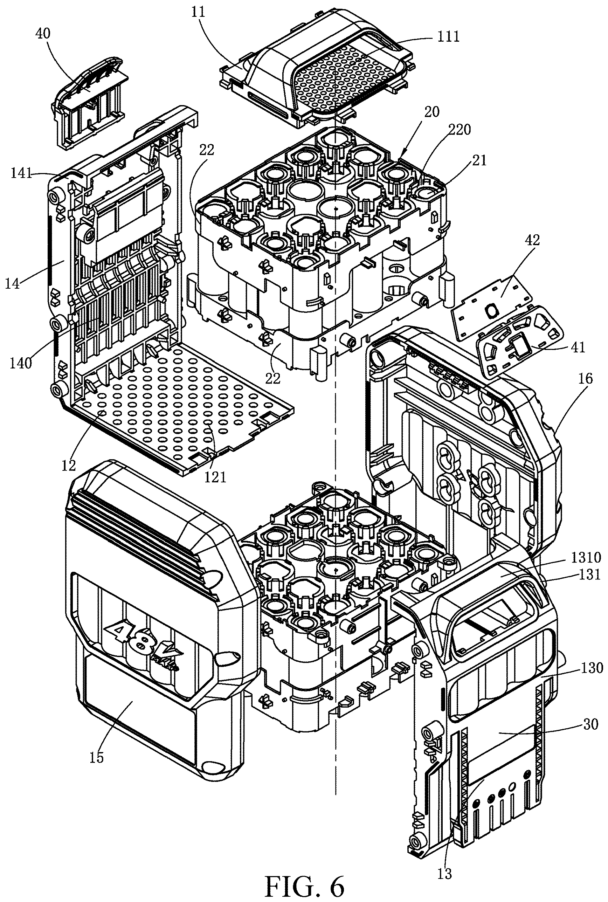

In an embodiment, referring to FIG. 6, there are a plurality of cell groups 20, and the plurality of cell groups 20 are stacked along the longitudinal direction of the cells 21. Optionally, there are two cell groups 20, where one cell group has 12 cells , and the other cell group has 12 cells. Further, each cell outputs 4V voltage, and the two cell groups are connected in parallel to output 48V voltage. Certainly, there may alternatively be one or more than two cell groups, which is not limited in the present invention.

In the related art, a circulation direction of a heat dissipation channel is generally perpendicular to a longitudinal direction of cells. However, there are many cells in a large-capacity battery pack, so that the cells are certainly overlapped in the vertical direction. Moreover, more cells indicate more overlapping layers. In a natural state, heat in the battery pack is transferred in a vertical direction from bottom to top, which leads to a higher temperature of the cells on the upper layer, and is thus not conducive to the heat dissipation of the cells, affecting the service life of the battery pack. However, in the present invention, the heat dissipation channel Q1 runs through the longitudinal direction of the cells 21, the area of cooled cells 21 is larger, and the cooling effect is better. In addition, the circulation direction of the heat dissipation channel Q1 is substantially the same as the direction of heat flow in the battery pack 1. In this way, the cooling air can come into contact with each cell to the maximum extent, ensuring that the cells can be cooled uniformly.

In an embodiment, the battery pack housing 10 further includes a housing middle portion arranged between the housing upper portion and the housing lower portion. The housing middle portion includes a plurality of side surfaces connecting the top surface 11 and the bottom surface 12. The plurality of side surfaces include a first side surface 13, a second side surface 14, a third side surface 15, and a fourth side surface 16. The first side surface 13 and the second side surface 14 are arranged opposite to each other, the third side surface 15 and the fourth side surface 16 are arranged opposite to each other, and the third side surface 15 and the fourth side surface 16 extend along an direction of intersection with the first side surface 13 and the second side surface 14. The first side surface 13, the second side surface 14, the third side surface 15, and the fourth side surface 16 may be integrally formed, or may be provided as single parts.

Further, the first air vent 121 includes a plurality of first air holes, the second air vent 111 includes a plurality of second air holes. The first air holes and the second air holes may be circular, square, or in other shapes. A ratio of each of a sum of cross-sectional areas of the plurality of first air holes and a sum of cross-sectional areas of the plurality of second air holes to a cross-sectional area of the cell group 20 is not less than 0.2. That is, a ratio of a sum of cross-sectional areas of the plurality of first air holes to the cross-sectional area of the cell group 20 is not less than 0.2, and a ratio of a sum of cross-sectional areas of the plurality of second air holes to the cross-sectional area of the cell group 20 is not less than 0.2. Optionally, the first air vent 121 with the plurality of first air holes further includes a first intermediate region connecting the plurality of first air holes, and the second air vent 111 further includes a second intermediate region connecting the plurality of second air holes. Such arrangement of the first air vent 121 and the second air vent can ensure the ventilation volume of the first air vent 121 and the second air vent 111, thereby ensuring the heat dissipation effect of the cells.

Referring to FIG. 6, FIG. 7, and FIG. 8, in an embodiment, each cell group includes a bracket 22 for fixing the cells 21, the bracket 22 includes a plurality of cylindrical walls, an accommodating hole 220 for receiving the cells 21 is formed in an inner cavity of each cylindrical wall, and the peripheral surfaces of the cells 21 are coupled to the accommodating holes 220 in a shape matching manner. Optionally, the bracket 22 includes a first bracket 221 and a second bracket 222 connected to the first bracket 221. The first bracket 221 and the second bracket 222 have substantially the same shape and structure. The first bracket 221 and the second bracket 222 respectively receive two ends of the cells 21 in the longitudinal direction. The first bracket 221 receives one end of the cells 21 close to the first air vent 121, and the second bracket 222 receives one end of the cells 21 close to the second air vent 111. An intermediate region between the two ends of the cells 21 is not covered by the bracket 22, and the cooling air can pass through the intermediate region of the cells 21 to cool at least part of the peripheral surfaces of the cells 21.

In an embodiment, the quantity of accommodating holes 220 is greater than the quantity of cells 21. Optionally, each cell group has 12 cells 21 and 20 accommodating holes 220. In this way, the cooling air may enter from accommodating holes that do not accommodate cells, and then cool the cells.

In an embodiment, a plurality of openings 223 are provided on each of the first bracket 221 and the second bracket 222, and the openings 223 are in communication with the heat dissipation channel Q1. Optionally, the openings 223 are arranged between adjacent cylindrical walls. When the cooling air enters from the battery pack housing 10, the cooling air may pass through the openings 223 on the first bracket 221 and the second bracket 222, and the intermediate region between the two ends of the cells 21, and finally flow out from the battery pack housing 10. Optionally, the plurality of openings 223 have different diameters. More openings are provided in a region away from an air outlet, and the openings in the region have larger diameters, which can ensure that the cooling air flowing in from the region away from the air outlet has a larger flow rate, and the cooling air has a longer flow path, thereby cooling more cells.

In an embodiment, an air guide plate 224 protrudes on a side of the bracket 22 close to the cells 21, and the air guide plate 224 is configured to change an airflow direction in the heat dissipation channel Q1. Optionally, the air guide plate 224 includes a first rib plate 2241, a second rib plate 2242 parallel to the first rib plate 2241, and a third rib plate 2243 connecting the first rib plate 2241 and the second rib plate 2242. Specifically, an extension direction of the first rib plate 2241 is parallel to the third side surface 15, and an extension direction of the second rib plate 2242 is parallel to the fourth side surface 16. When the cooling air enters from the openings 223 on the bracket 22, the cooling air can change the flow direction along the contour of the air guide plate 224, cool the corresponding cells and then flow out of the housing to uniformly cool the cells.

In an embodiment, a holdable handle 112 is arranged on the battery pack housing 10, the handle 112 includes a first end portion 1120 and a second end portion 1121 that are separately connected to the battery pack housing 10, and a holding portion 1122 connecting the first end portion 1120 and the second end portion 1121, and the handle 112 has flexibility to enable a distance of the holding portion 1122 relative to the battery pack housing 10 to change. Optionally, the handle 112 is arranged on the housing upper portion, preferably on the top surface 11. The handle 112 arranged on the battery pack housing can make it easy for the operator to carry the battery pack, especially a heavy large-capacity battery pack. That the handle 112 has flexibility to enable a distance of the holding portion 1122 relative to the battery pack housing 10 to change means that the holding portion 1122 can be elastically deformed, and can expand and contract within a specific range. When the operator holds the handle, due to the applied force, the distance of the holding portion relative to the battery pack housing may be changed through elastic deformation. Generally, the handle 112 has flexibility so that when the operator holds the handle 112, a deformation amount of the holding portion 1122 in the vertical direction is not less than 3 mm. In this way, the handle can be accommodated in a small space, to miniaturize the battery pack, and the elastic deformation of the holding portion can prevent the handle 112 from being broken and failing. The handle 112 may be made of a rubber material, or may be made of elastic metal or plastic. The first end portion 1120, the second end portion 1121, and the holding portion 1122 may be integrally formed, or may be separately formed and then connected to each other.

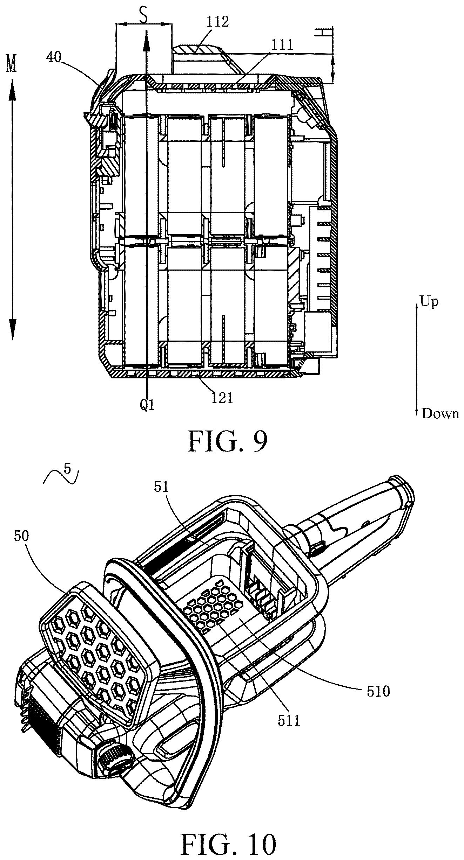

In an embodiment, a concave surface 114 and an edge surface 113 surrounding the concave surface 114 are provided on a surface of the battery pack housing 10 on which the handle 112 is arranged, the concave surface 114 is away from the holding portion 1122 relative to the edge surface 113, and a projection of the holding portion 1122 on the concave surface 114 at least partially coincides with the concave surface 114. Optionally, the concave surface 114 and the edge surface 113 are provided on the top surface 11, the second air vent 111 is arranged on the concave surface 114, and the first end portion 1120 and the second end portion 1121 are arranged on the edge surface 113. Further, as shown in FIG. 9, a distance H between the holding portion 1122 and the concave surface 114 is between 14 and 17 mm, that is, the distance H between a lowest point of the holding portion 1122 and the concave surface 114 is between 14 and 17 mm. In this way, even if a height of the holding portion 1122 protruding from the housing upper portion is small, a relatively large space for accommodating the hand of the operator can be obtained, which can not only achieve a relatively small overall size of the battery pack, but also meet the requirements of holding the battery pack.

In an embodiment, referring to FIG. 1, the battery pack 1 includes a locking portion 43 and an unlocking portion 40, the locking portion 43 is configured for position locking between the battery pack 1 and an external device, and the unlocking portion 40 is configured to release the position locking between the battery pack 1 and the external device. Optionally, the unlocking portion 40 is set in a button shape, and the locking portion 43 is set in a clip shape. Certainly, the unlocking portion 40 and the locking portion 43 may alternatively be set in other shapes. The unlocking portion 40 and the locking portion 43 may be integrally formed, or may be arranged separately. In this application, the external device refers to an electric tool powered by the battery pack 1 and/or a charger that charges the battery pack. Further, as shown in FIG. 9, the unlocking portion 40 is arranged on a side of the handle 112, the unlocking portion 40 is arranged near the handle 112, and a minimum distance S between the unlocking portion 40 and the handle 112 in the horizontal direction is not greater than 85 mm. That is, a distance between the closest points of the unlocking portion 40 and the handle 112 in the horizontal direction is not greater than 85 mm. Optionally, the minimum distance S between the unlocking portion 40 and the handle 112 in the horizontal direction is 45 mm. In this way, the operator can simultaneously press the unlocking portion 40 and hold the handle 112 with one hand to simultaneously unlock and take out the battery pack from the external device, which is convenient and quick to operate.

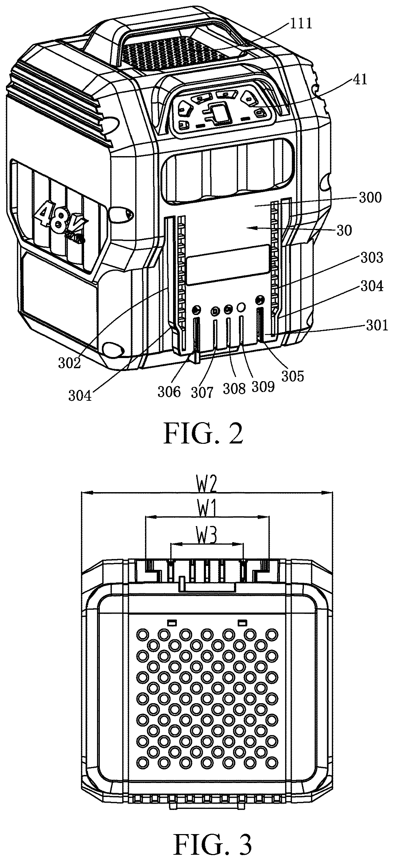

In an embodiment, the battery pack further includes an adapting portion for connecting to an external device along a sliding direction M. The sliding direction M is the longitudinal direction of the cells, and is substantially parallel to the circulation direction of the heat dissipation channel Q1. The adapting portion 30 is arranged on a side portion of the battery pack housing 10, and the side portion may be a side surface of the battery pack housing 10, or may be a combination of all or part of several side surfaces. In an embodiment, as shown in FIG. 2 and FIG. 6, the side portion of the battery pack housing 10 includes the first side surface 13, and parts of the third side surface 15 and the fourth side surface 16 projected onto the first side surface 13. The adapting portion 30 includes a first end 300 close to the top surface, a second end 301 opposite to the first end 300, and two opposite side walls 302 and 303 connecting the first end 300 and the second end 301. A pair of sliding rails or sliding grooves 304 extending in parallel along the sliding direction M are provided between the two side walls 302 and 303.

A distance between the pair of sliding rails or sliding grooves is defined as a first width W1, and an outermost boundary of the side portion has a second width perpendicular to the sliding direction M. Referring to FIG. 3, the second width W2 refers to a sum of a width of the first side surface 13 and a width perpendicular to the sliding direction M of the third side surface 15 and the fourth side surface 16 projected onto the first side surface 13. A ratio of the first width W1 to the second width W2 is between 0.47 and 0.52. When the first width W1 is 64 mm and the second width W2 is 137 mm, the ratio of the first width W1 to the second width W2 is 0.47; when the first width W1 is 67.5 mm and the second width W2 is 137 mm, the ratio of the first width W1 to the second width W2 is 0.49; and when the first width W1 is 71 mm and the second width W2 is 137 mm, the ratio of the first width W1 to the second width W2 is 0.52.

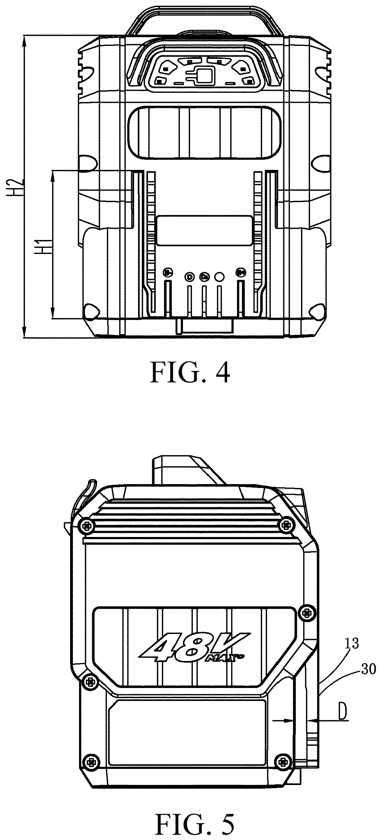

Further, a length of the sliding rail or the sliding groove 304 is defined as a first height HI, and the outermost boundary of the side portion has a second height H2 parallel to the sliding direction M. As shown in FIG. 4, the second height H2 refers to a height of the first side surface 13. A ratio of the first height H1 to the second height H2 is between 0.48 and 0.5. When the first height H1 is 80 mm and the second height H2 is 166 mm, the ratio of the first height H1 to the second height H2 is 0.48; when the first height H1 is 81 mm and the second height H2 is 166 mm, the ratio of the first height H1 to the second height H2 is 0.49; and when the first height H1 is 83 mm and the second height H2 is 166 mm, the ratio of the first height H1 to the second height H2 is 0.5. Such arrangement can not only ensure the compact structure of the battery pack, but also ensure that the battery pack is firmly connected to the external device.

Further, the adapting portion 30 further includes a terminal accommodating portion arranged at the second end 301. The terminal accommodating portion includes a first terminal groove 305, a second terminal groove 306, a third terminal groove 307, a fourth terminal groove 308, a fifth terminal groove 309, a positive terminal accommodated in the first terminal groove 305 and configured to be electrically connected to the external device, a negative terminal accommodated in the second terminal groove 306 and configured to be electrically connected to the external device, and communication terminals respectively accommodated in the third terminal groove 307, the fourth terminal groove 308, and the fifth terminal groove 309 and configured to be electrically connected to the external device. The communication terminals are configured to transmit various data of the battery pack 1, and the quantity of terminal grooves for accommodating the communication terminals is not limited to 3, and may be 2, 4, 5, or the like. Optionally, the first terminal groove 305 and the second terminal groove 306 are provided at two ends of the terminal accommodating portion and between the pair of sliding rails or sliding grooves 304. The third terminal groove 307, the fourth terminal groove 308, and the fifth terminal groove are provided between the first terminal groove 305 and the second terminal groove 306. Optionally, the first width W1 is 67.5 mm, the first height H1 is 81 mm, the second width W2 is 137 mm, the second height H2 is 166 mm, a height D of the sliding rail or sliding groove 304 is 5.3 mm, and a center distance W3 between the first terminal groove 305 and the second terminal groove 306 is between 37 and 42 mm. Such arrangement achieves a more stable and reliable connection between the battery pack 1 and the external device.

In an embodiment, the unlocking portion 40 is arranged on the second side surface 14, and the adapting portion 30 and the unlocking portion 40 are arranged on opposite sides of the battery pack housing 10, which is convenient for the operator to apply a relatively balanced force to the battery pack when unlocking the battery pack or plugging the battery pack.

In an embodiment, the adapting portion 30 does not extend beyond the outermost boundary of the side portion. That is, the adapting portion 30 is within a frame defined by the outermost boundary of the side portion. As shown in FIG. 5, the adapting portion 30 does not extend beyond an outermost boundary of the first side surface 13 and projections of the third side surface 15 and the fourth side surface 16 on the first side surface 13.

In an embodiment, referring to FIG. 2, the battery pack 1 further includes a power display portion 41 for displaying an electric quantity of the battery pack 1, the power display portion 41 includes a power display button and a plurality of power display lamps, and a circuit board 42 that controls the battery pack 1 to display the electric quantity is further arranged between the power display portion 41 and the battery pack housing 10. When the power display button is pressed, the operator can determine the electric quantity of the battery pack 1 according to the quantity of displayed power display lamps. Optionally, there are six power display lamps. Certainly, there may be two, three or another quantity of power display lamps. The power display lamps are LED lamps. Further, the power display portion 41 and the adapting portion 30 are arranged on a same side of the battery pack 1, that is, the power display portion 41 and the adapting portion 30 may be arranged on a same surface of the battery pack 1. Alternatively, as shown in FIG. 2 and FIG. 6, the power display portion 41 and the adapting portion 30 are not arranged on a same surface, but projections thereof in a side view direction are arranged on a same surface but do not overlap. Generally, a circuit board (not shown) of the battery pack is adjacent to the adapting portion, and the circuit board 42 responsible for power display is adjacent to the power display portion 41. The power display portion 41 and the adapting portion 30 are arranged on the same side of the battery pack 1, so that the circuit board of the battery pack and the circuit board 42 can be arranged on the same side, which facilitates circuit layout and reduces space and costs.

Optionally, a first slope surface 141 inclined toward the handle 112 is provided at a part of the second side surface 14 close to the top surface 11, the unlocking portion 40 is arranged on the first slope surface 141, a second slope surface 131 corresponding to the first slope surface 141 is provided on the first side surface 13, and the power display portion 41 is arranged on the second slope surface 131. The first slope surface 141 being corresponding to the second slope surface 131 means that the first slope surface 141 and the second slope surface 131 are approximately at a same height in the vertical direction, and are both slope surfaces formed by inclining parts of the corresponding side surfaces close to the top surface 11 toward the handle 112. In this way, the area occupied by the battery pack housing in the vertical direction can be reduced, which is beneficial to the miniaturization of the battery pack. Optionally, a protection cover 1310 is arranged on the second slope surface 131, and the protection cover 1310 is configured to cover at least part of the power display portion 41 to prevent water from entering the power display portion during raining.

In an embodiment, as shown in FIG. 6, a third air vent 140 is provided in the housing middle portion. Optionally, the third air vent 140 is provided on the second side surface 14. The third air vent 140 is added to the battery pack housing 10, which can increase the ventilation volume of cooling air, thereby better cooling the battery pack 1.

In an embodiment, the third air vent 140 at least partially overlaps a projection of the cells 21 close to the bottom surface 12 in the vertical direction. In this way, the cooling air enters the battery pack from the third air vent 140, and may first cool bottom cells close to the bottom surface 12, and then cool top cells close to the top surface 11. Each cell can be cooled, thereby uniformly cooling the cells.

In an embodiment, referring to FIG. 9, the battery pack 1 may slide along the sliding direction M to be connected to or detached from the external device. When the operator presses the unlocking portion 40 and the battery pack 1 slides relative to the external device from bottom to top along the sliding direction, the positive terminal, the negative terminal, and communication terminals in the battery pack 1 are respectively disconnected from corresponding paired terminals on the external device, so that the adapting portion 30 is disconnected from the external device, and the battery pack 1 is detached from the external device. When the battery pack 1 slides relative to the external device from top to bottom along the sliding direction, the positive terminal, the negative terminal, and communication terminals in the battery pack 1 are connected to the corresponding paired terminals on the external device, so that the adapting portion 30 is connected to the external device, and the battery pack 1 is connected to the external device. The sliding direction M is substantially parallel to the circulation direction of the heat dissipation channel Q1, which can ensure that after the battery pack 1 is connected to the external device, an arrangement direction of the cells is substantially parallel to the circulation direction of the heat dissipation channel Q1, thereby ensuring that the cells 21 can be cooled by the cooling air to the maximum extent.

Referring to FIG. 10 to FIG. 14, the present invention further provides an electric tool system, including an electric tool body 5 and a battery pack 1 detachably connected to the electric tool body 5. The battery pack 1 is the battery pack 1 described above, and is not described again herein. When the battery pack 1 is connected to the electric tool body 5, an airflow may flow from the first air vent 121 through at least part of the peripheral surfaces of the cells 21 and flow out from the second air vent 111. FIG. 10 to FIG. 14 illustrate a case in which the electric tool body 5 is a chain saw, but the electric tool body 5 may alternatively be another electric tool, such as an angle grinder, a lawn mower, an electric hammer, or a pruning shear, which is not limited herein.

The electric tool body 5 includes a tool housing 50, a motor (not shown) accommodated in the tool housing 50, and an output portion (not shown) driven by the motor. The tool housing 50 includes a receiving portion 51 for receiving at least part of the battery pack 1. The receiving portion 51 includes a bottom surface 510 arranged opposite to the housing lower portion. A first ventilation hole 511 is provided on the bottom surface 510. The first ventilation hole 511 is airflow-communicable with the first air vent 121. The first ventilation hole 511 is provided on the bottom surface 510, and the cooling air enters the battery pack 1 from the first ventilation hole 511, that is, the cooling air enters the first air vent 121 through the first ventilation hole 511, and flows out from the second air vent 111 along the circulation direction of the heat dissipation channel Q1. In this way, the cooling air is not blocked by the electric tool body 5 in the vertical direction, and an effective heat dissipation channel can be formed from bottom to top. In addition, the cooling air enters the battery pack 1 in the shortest distance for cooling, and there is no loss of air volume, which has a better cooling effect on the cells 21.

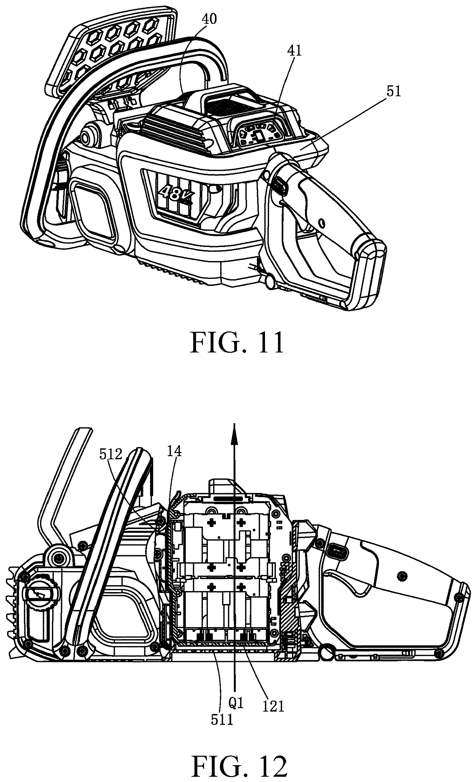

In an embodiment, a gap is provided between the receiving portion 51 and the battery pack 1, and an airflow can enter the first air vent 121 through the gap, flow through at least part of the peripheral surfaces of the cells 21, and flow out from the second air vent 111. As shown in FIG. 12, the receiving portion 51 includes a side surface 512 arranged opposite to the housing middle portion, and a gap (not shown) for the cooling air to flow is provided between the side surface 512 and the housing middle portion. Optionally, the side surface 512 is arranged opposite to the second side surface 14, and there is a gap for the cooling air to flow between the side surface 512 and the second side surface 14. Certainly, not only a gap is provided between the side surface 512 and the second side surface 14, but also gaps may be provided between other side surfaces of the housing middle portion and corresponding surfaces of the receiving portion 51. A gap may be further provided between the bottom surface 510 of the receiving portion 51 and the bottom surface 12 of the battery pack 1. In this way, the cooling air may enter the third air vent 140 and the first air vent 121 respectively from the gaps, then enter the battery pack 1, and flow out from the second air vent 111 along the circulation direction of the heat dissipation channel Q1. The gap is provided between the receiving portion 51 and the battery pack 1, which can increase the air intake volume of the cooling air, thereby better cooling the cells 21.

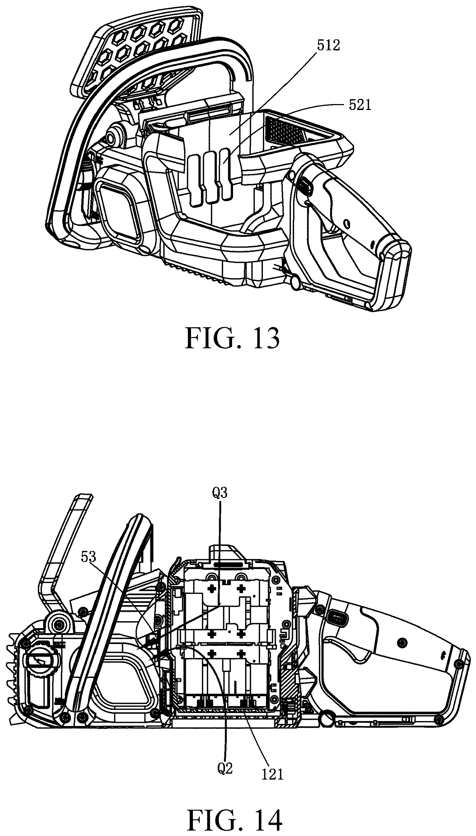

In an embodiment, as shown in FIG. 13 and FIG. 14, the side surface 512 include a second ventilation hole 521. The electric tool body 5 further includes a fan 53 arranged in the tool housing 50. When the battery pack 1 is accommodated in the receiving portion 51, an airflow generated by the fan 53 includes: a first airflow Q2, sucked from the first air vent 121 and flowing to the third air vent 140; and a second airflow Q3, sucked from the second air vent 111 and flowing to the third air vent 140, the first airflow Q2 and the second airflow Q3 merging at the third air vent 140, and then flowing out from the second ventilation hole 521. The fan 53 is arranged in the electric tool body 5, which can form the additional first airflow Q2 and second airflow Q3 to cool the battery pack 1, thereby achieving a better cooling effect.

Further, due to the action of the fan 53, the first airflow Q2 is sucked from the first air vent 121, passes through the openings 223 on the first bracket 221, is guided by the air guide plate 224, passes through the cells 21, and then flows to the third air vent 140; the second airflow Q3 is sucked from the second air vent 111, passes through the openings 223 on the second bracket 222, is guided by the air guide plate 224, passes through the cells 21, and then flows to the third air vent 140; and finally, the first airflow Q2 and the second airflow Q3 merge at the third air vent 140, then flow out from the second ventilation hole 521, and finally are discharged into the air from the air outlet (not shown) of the electric tool body 5.

In an embodiment, referring to FIG. 11, when the battery pack 1 is connected to the electric tool body 5, the power display portion 41 is exposed to the receiving portion 51, which makes it easy to observe a remaining electric quantity of the battery pack 1 during use.

In an embodiment, referring to FIG. 11, when the battery pack 1 is connected to the electric tool body 5, the unlocking portion 40 is exposed to the receiving portion 51, which makes it easy for the operator to remove the battery pack 1 from the receiving portion 51.

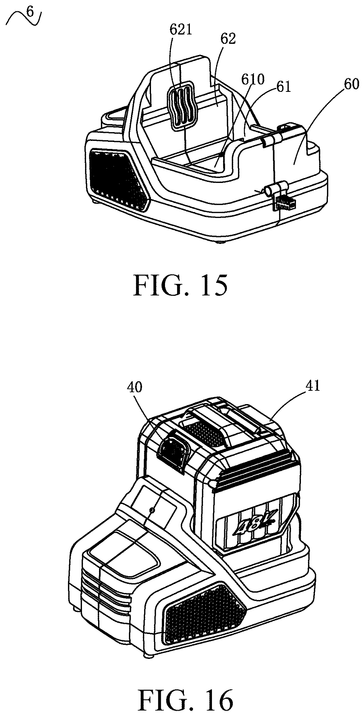

Referring to FIG. 15 to FIG. 18, the present invention further provides a charging system. The charging system includes a charger 6 and a battery pack 1 detachably connected to the charger 6. The charger 6 includes a charger housing 60 and a charging circuit (not shown) arranged in the charger housing 60. The battery pack 1 is the battery pack 1 described above, and is not described again herein. When the battery pack 1 is connected to the charger 6, an airflow may flow from the first air vent 121 through at least part of the peripheral surfaces of the cells 21 and flow out from the second air vent 111.

The charging system is similar to the foregoing electric tool system, and a cooling process of the charging system is introduced in detail below.

The charger housing 60 also includes a receiving portion 61 for accommodating at least part of the battery pack. The receiving portion 61 includes a bottom surface 610 arranged opposite to the housing lower portion. A first ventilation hole (not shown) is provided on the bottom surface 610. The first ventilation hole is airflow-communicable with the first air vent 121. The first ventilation hole is provided on the bottom surface 610, and the cooling air enters the battery pack 1 from the first ventilation hole, that is, the cooling air enters the first air vent 121 through the first ventilation hole, and flows out from the second air vent 111 along the circulation direction of the heat dissipation channel Q1. In this way, the cooling air is not blocked by the charger 6 in the vertical direction, and an effective heat dissipation channel can be formed from bottom to top. In addition, the cooling air enters the battery pack 1 in the shortest distance for cooling, and there is no loss of air volume, which has a better cooling effect on the cells 21.

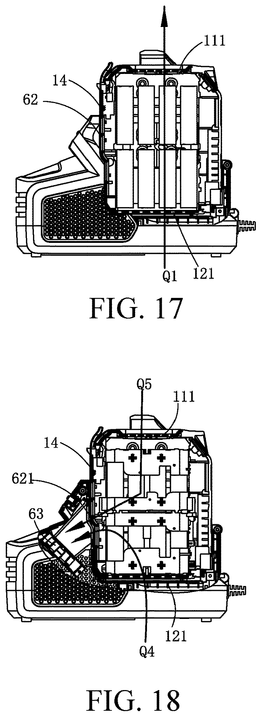

In an embodiment, a gap is provided between the receiving portion 61 and the battery pack 1, and the gap is airflow-communicable with the first air vent 121. As shown in FIG. 17, the receiving portion 61 includes a side surface 62 arranged opposite to the housing middle portion, and a gap (not shown) for the cooling air to flow is provided between the side surface 62 and the housing middle portion. Optionally, the side surface 62 is arranged opposite to the second side surface 14, and there is a gap for the cooling air to flow between the side surface 62 and the second side surface 14. Certainly, not only a gap is provided between the side surface 62 and the second side surface 14, but also gaps may be provided between other side surfaces of the housing middle portion and corresponding surfaces of the receiving portion 51. A gap may be further provided between the bottom surface 610 of the receiving portion 61 and the bottom surface 12 of the battery pack 1. In this way, the cooling air may enter the third air vent 140 and the first air vent 121 respectively from the gaps, then enter the battery pack 1, and flow out from the second air vent 111 along the circulation direction of the heat dissipation channel Q1. The gap is provided between the receiving portion 61 and the battery pack 1, which can increase the air intake volume of the cooling air, thereby better cooling the cells 21.

In an embodiment, as shown in FIG. 18, the side surface 62 include a second ventilation hole 621. The charger 6 further includes a fan 63 arranged in the charger housing 60. When the battery pack 1 is accommodated in the receiving portion 61, an airflow generated by the fan 63 includes: a first airflow Q4, sucked from the first air vent 121 and flowing to the third air vent 140; and a second airflow Q5, sucked from the second air vent 111 and flowing to the third air vent 140, the first airflow Q4 and the second airflow Q5 merging at the third air vent 140, and then flowing out from the second ventilation hole 621. The fan 63 is arranged in the charger 6, which can form the additional first airflow Q4 and second airflow Q5 to cool the battery pack 1, thereby achieving a better cooling effect.

Further, due to the action of the fan 63, the first airflow Q4 is sucked from the first air vent 121, passes through the openings 223 on the first bracket 221, is guided by the air guide plate 224, passes through the cells 21, and then flows to the third air vent 140; the second airflow Q5 is sucked from the second air vent 111, passes through the openings 223 on the second bracket 222, is guided by the air guide plate 224, passes through the cells 21, and then flows to the third air vent 140; and finally, the first airflow Q4 and the second airflow Q5 merge at the third air vent 140, then flow out from the second ventilation hole 621, and finally are discharged into the air from the air outlet (not shown) of the charger 6.

In an embodiment, referring to FIG. 16, the power display portion 41 is exposed to the receiving portion 61, which makes it easy to observe a remaining electric quantity of the battery pack 1 during use.

In an embodiment, referring to FIG. 16, the unlocking portion 40 is configured to release locking between the battery pack 1 and the charger 6, and the unlocking portion 40 is exposed to the receiving portion 61, which makes it easy for the operator to remove the battery pack 1 from the receiving portion 61.

The technical features in the foregoing embodiments may be randomly combined. To make the description concise, not all possible combinations of the technical features in the foregoing embodiments are described. However, combinations of the technical features shall all be considered as falling within the scope described in this specification provided that the combinations of the technical features do not conflict with each other.

The foregoing embodiments merely describe several implementations of the present disclosure, and the descriptions are specific and detailed, but cannot be understood as a limitation to the patent scope of the present invention. It should be noted that, a person of ordinary skill in the art may further make some variations and improvements without departing from the concept of the present invention, and the variations and improvements belong to the protection scope of the present invention. Therefore, the protection scope of the patent of the present invention shall be topic to the claims.

## Claims

1. A battery pack, comprising:
a battery pack housing; and
a cell group, arranged in the battery pack housing, the cell group comprising a plurality of electrically connected cells, wherein
the battery pack housing comprises a housing upper portion and a housing lower portion arranged opposite to the housing upper portion, a first air vent is provided on the housing lower portion, a second air vent is provided on the housing upper portion, a longitudinal direction of the cells is vertically arranged along an up-down direction of the battery pack housing, a heat dissipation channel in communication with the first air vent and the second air vent is formed in the battery pack, and at least part of peripheral surfaces of the cells are arranged in the heat dissipation channel.

2. The battery pack according to claim 1, wherein there are a plurality of cell groups, and the plurality of cell groups are stacked along the longitudinal direction of the cells.

3. The battery pack according to claim 1, wherein the first air vent comprises a plurality of first air holes, the second air vent comprises a plurality of second air holes, and a ratio of a sum of cross-sectional areas of the plurality of first air holes to a cross-sectional area of the cell group is not less than 0.2, and a ratio of a sum of cross-sectional areas of the plurality of second air holes to a cross-sectional area of the cell group is not less than 0.2.

4. The battery pack according to claim 1, wherein the battery pack further comprises a housing middle portion arranged between the housing upper portion and the housing lower portion, and a third air vent is provided on the housing middle portion.

5. The battery pack according to claim 1, wherein the cell group comprises a bracket for fixing the cells, a plurality of openings are provided on the bracket, and the openings are in communication with the heat dissipation channel.

6. The battery pack according to claim 5, wherein an air guide plate protrudes on a side of the bracket close to the cells, and the air guide plate is configured to change an airflow direction in the heat dissipation channel.

7. The battery pack according to claim 1, wherein a holdable handle is arranged on the battery pack housing, the handle comprises a first end portion and a second end portion that are separately connected to the battery pack housing, and a holding portion connecting the first end portion and the second end portion, and the handle has flexibility to enable a distance of the holding portion relative to the battery pack housing to change.

8. The battery pack according to claim 7, wherein the handle is made of a rubber material.

9. The battery pack according to claim 7, wherein the battery pack further comprises an adapting portion for connecting to an external device, and an unlocking portion for releasing position locking between the battery pack and the external device.

10. The battery pack according to claim 9, wherein the unlocking portion is arranged on a side of the handle, and a minimum distance between the unlocking portion and the handle in a horizontal direction is not greater than 85 mm.

11. The battery pack according to claim 9, wherein the adapting portion and the unlocking portion are arranged on opposite sides of the battery pack.

12. The battery pack according to claim 7, wherein a concave surface and an edge surface surrounding the concave surface are provided on a surface of the battery pack housing on which the handle is arranged, the concave surface is away from the holding portion relative to the edge surface, and a projection of the holding portion on the concave surface at least partially coincides with the concave surface.

13. The battery pack according to claim 12, wherein a distance between the holding portion and the concave surface is between 14 and 17 mm.

14. The battery pack according to claim 1, wherein the battery pack comprises an adapting portion for connecting to an external device along a sliding direction, the adapting portion is arranged on a side portion of the battery pack housing, the adapting portion comprises a pair of sliding rails or sliding grooves extending in parallel along the sliding direction, a distance between the pair of sliding rails or sliding grooves is defined as a first width, an outermost boundary of the side portion has a second width perpendicular to the sliding direction, and a ratio of the first width to the second width is between 0.47 and 0.52.

15. The battery pack according to claim 14, wherein a length of the sliding rail or the sliding groove is defined as a first height, the outermost boundary of the side portion has a second height parallel to the sliding direction, and a ratio of the first height to the second height is between 0.48 and 0.5.

16. The battery pack according to claim 14, wherein the adapting portion does not extend beyond the outermost boundary of the side portion.

17. An electric tool system, comprising an electric tool body, the electric tool body comprising a tool housing, a motor accommodated in the tool housing, and an output portion driven by the motor, wherein the electric tool system further comprises the battery pack according to claim 1, the tool housing comprises a receiving portion for receiving at least part of the battery pack, the battery pack is detachably connected to the electric tool body, the battery pack provides power for the motor, and when the battery pack is connected to the electric tool body, an airflow is allowed to flow from the first air vent through the at least part of the peripheral surfaces of the cells and flow out from the second air vent.

18. The electric tool system according to claim 17, wherein the receiving portion comprises a bottom surface arranged opposite to the housing lower portion, a first ventilation hole is provided on the bottom surface, and the first ventilation hole is airflow-communicable with the first air vent.

19. The electric tool system according to claim 17, wherein a gap is provided between the receiving portion and the battery pack, and an airflow is allowed to enter the first air vent through the gap, flow through the at least part of the peripheral surfaces of the cells, and flow out from the second air vent.

20. The electric tool system according to claim 17, wherein the battery pack further comprises a housing middle portion arranged between the housing upper portion and the housing lower portion, a third air vent is provided on the housing middle portion, the electric tool body further comprises a fan arranged in the tool housing, the receiving portion comprises a side surface arranged opposite to the housing middle portion, a second ventilation hole is provided on the side surface, and when the battery pack is accommodated in the receiving portion, an airflow generated by the fan comprises: a first airflow, sucked from the first air vent and flowing to the third air vent; and a second airflow, sucked from the second air vent and flowing to the third air vent, the first airflow and the second airflow merging at the third air vent, and then flowing out from the second ventilation hole.

21. The electric tool system according to claim 17, wherein a power display portion for displaying an electric quantity of the battery pack is arranged on the battery pack housing, and when the battery pack is connected to the electric tool body, the power display portion is exposed to the receiving portion.

22. The electric tool system according to claim 17, wherein the battery pack comprises a locking portion and an unlocking portion, the locking portion is configured for position locking between the battery pack and the electric tool body, the unlocking portion is configured to release the position locking between the battery pack and the electric tool body, and the unlocking portion is exposed to the receiving portion.

23. A charging system, comprising a charger, the charger comprising a charger housing and a charging circuit arranged in the charger housing, wherein the charging system further comprises the battery pack according to claim 1, the charger housing comprises a receiving portion for accommodating at least part of the battery pack, the battery pack is detachably connected to the charger, and when the battery pack is connected to the charger, an airflow is allowed to flow from the first air vent through the at least part of the peripheral surfaces of the cells and flow out from the second air vent.

24. The charging system according to claim 23, wherein the receiving portion comprises a bottom surface arranged opposite to the housing lower portion, a first ventilation hole is provided on the bottom surface, and the first ventilation hole is airflow-communicable with the first air vent.

25. The charging system according to claim 23, wherein a gap is provided between the receiving portion and the battery pack, and an airflow is allowed to enter the first air vent through the gap, flow through the at least part of the peripheral surfaces of the cells, and flow out from the second air vent.

26. The charging system according to claim 23, wherein the battery pack further comprises a housing middle portion arranged between the housing upper portion and the housing lower portion, a third air vent is provided on the housing middle portion, the charger further comprises a fan arranged in the charger housing, the receiving portion comprises a side surface arranged opposite to the housing middle portion, a second ventilation hole is provided on the side surface, and when the battery pack is accommodated in the receiving portion, an airflow generated by the fan comprises: a first airflow, sucked from the first air vent and flowing to the third air vent; and a second airflow, sucked from the second air vent and flowing to the third air vent, the first airflow and the second airflow merging at the third air vent, and then flowing out from the second ventilation hole.

27. The charging system according to claim 23, wherein a power display portion is arranged on the battery pack housing, and when the battery pack is connected to the charger, the power display portion is exposed to the receiving portion.

28. The electric tool system according to claim 23, wherein the battery pack comprises a locking portion and an unlocking portion, the locking portion is configured for position locking between the battery pack and the charger, the unlocking portion is configured to release the position locking between the battery pack and the charger, and the unlocking portion is exposed to the receiving portion.
